# EUROPEAN PATENT APPLICATION

(11) **EP 4 804 312 A1**
(43) Date of publication of application: **09.09.2026**
(21) Application number: 24884309.6
(22) Date of filing: 24.09.2024
(51) Int. Cl.: H01M 50/242, H01M 50/289, H01M 50/204, H01M 50/249

(54) **BATTERY ASSEMBLY, BATTERY PACK, AND ELECTRIC SYSTEM**

(30) Priority: 31.10.2023 CN 202322941357 U
(71) Applicant: BYD Company Limited, Shenzhen, Guangdong 518118 (CN)
(72) Inventor: SUN, Zenan, Shenzhen, Guangdong 518118 (CN); ZHOU, Dongjie, Shenzhen, Guangdong 518118 (CN); LIU, Xufeng, Shenzhen, Guangdong 518118 (CN); TAN, Zhijia, Shenzhen, Guangdong 518118 (CN); ZHU, Yan, Shenzhen, Guangdong 518118 (CN)
(74) Representative: Mathys & Squire
(86) International application number: PCT/CN2024/120682
(87) International publication number: WO 2025/092302

(57) **Abstract**

An electric system, having a battery pack, wherein the battery pack has a battery assembly. The battery assembly comprises a plurality of battery cells stacked in the vertical direction, a support member and an adhesive member. In the battery assembly, the adhesive member and the support member jointly cooperate to prevent two stacked adjacent battery cells from separating from each other, and a gap is also formed in the central area of opposite surfaces of the two adjacent battery cells to provide a reserved expansion space, thereby preventing the two adjacent battery cells from squeezing each other due to excessive expansion force. In addition, the support member is positioned close to a first side wall to ensure that the reserved expansion space formed in the central area of first surfaces is relatively reliable.

## Description

### CROSS-REFERENCES TO RELATED APPLICATIONS

This application claims priority to Chinese Patent Application No. 202322941357.7, filed with the China National Intellectual Property Administration on October 31, 2023, and entitled "BATTERY ASSEMBLY, BATTERY PACK, AND ELECTRICAL SYSTEM", which is incorporated herein by reference in its entirety.

### TECHNICAL FIELD

This application relates to the field of battery technologies, and in particular, to a battery assembly, a battery pack, and an electrical system.

### BACKGROUND

In related technologies, stacked battery cells are usually directly bound and fastened around a periphery of a plurality of battery cells via a cable tie, to ensure stability of a battery assembly. However, once the battery assembly undergoes a long-term charge/discharge cycle, each of the battery cells expands to some extent, and an expansion force accumulated after the plurality of battery cells expand is large. If there is not enough space to absorb expansion, the cable tie may break. This can cause the battery cells to separate from each other, thereby affecting performance and a service life of the battery assembly. Alternatively, the battery cells may be pressed against each other, resulting in lithium plating. This can also adversely affect performance and the service life of the battery assembly.

### SUMMARY

A technical problem to be solved by this application is to provide a battery assembly, a battery pack, and an electric vehicle, to solve the problem that performance and service life of the battery assembly are reduced because of lithium plating occurring when battery cells are pressed against each other in the battery assembly.

To solve the foregoing technical problem, according to a first aspect, this application provides a battery assembly. The battery assembly includes a plurality of battery cells stacked in a vertical direction, a support member, and an adhesive member. Opposite surfaces of two adjacent battery cells in the vertical direction are respectively first surfaces. The support member and the adhesive member are provided on the first surface, and the support member and the adhesive member are provided at an edge of the clearance area. Each of the battery cells includes a first side wall located on the same side of the battery assembly in a horizontal direction, the first side wall is connected to the first surface, a terminal post of the battery cell is provided on the first side wall, and the support member is provided adjacent to the first side wall.

In an embodiment of this application, the battery cell further includes a second side wall, the second side wall is connected to both the first side wall and the first surface, and the adhesive member is provided adjacent to the second side wall.

In an embodiment of this application, a distance between any position of the support member close to an edge of the first side wall and a plane on which the first side wall is located is less than a distance between a geometric center of the first surface and a plane on which an edge of the support member away from the first side wall is located; and/or
a distance between any position of the adhesive member close to an edge of the second side wall of the battery cell and a plane on which the second side wall of the battery cell is located is less than a distance between a geometric center of the first surface and a plane on which an edge of the adhesive member away from the second side wall is located.

In an embodiment of this application, a ratio of the distance between the any position of the support member close to the edge of the first side wall and the plane on which the first side wall is located to the distance between the geometric center of the first surface and the plane on which the edge of the support member away from the first side wall is located ranges from 0 to 0.8.

In an embodiment of this application, a ratio of the distance between the any position of the adhesive member close to the edge of the second side wall of the battery cell and the plane on which the second side wall of the battery cell is located to the distance between a geometric center of the first surface and a plane on which an edge of the adhesive member away from the second side wall is located ranges from 0 to 0.85.

In an embodiment of this application, there are at least two adhesive members, the at least two adhesive members are spaced apart in a length direction of the battery assembly, an included angle is preset between an extension direction of each adhesive member and an extension direction of the support member, and the preset included angle is between 0° and 90°.

In an embodiment of this application, both a projection of the support member and a projection of the adhesive member on the first surface are rectangular, and the extension direction of the support member is perpendicular to an extension direction of the adhesive member.

In an embodiment of this application, the support member extends in the length direction of the battery assembly or a width direction of the battery assembly and is located between two adjacent terminal posts, and both the length direction of the battery assembly and the width direction of the battery assembly are perpendicular to the vertical direction.

In an embodiment of this application, there are a plurality of support members, and all support members are spaced apart in the length direction of the battery assembly or the width direction of the battery assembly.

In an embodiment of this application, a ratio of a projected area of the support member on the first surface to an area of the first surface ranges from 0.1% to 10%.

In an embodiment of this application, a ratio of a projected area of the adhesive member on the first surface to an area of the first surface ranges from 20% to 70%.

In an embodiment of this application, the projected area of the support member on the first surface is less than the projected area of the adhesive member on the first surface.

In an embodiment of this application, the geometric center of the first surface is located in the clearance area.

In an embodiment of this application, the battery assembly further includes a filler adhesive, the filler adhesive is provided between the two adjacent battery cells and is located on the first surface, the battery cell further includes a third side wall, the third side wall and the first side wall are opposite to each other in the width direction of the battery assembly, and the filler adhesive is provided adjacent to the third side wall.

In an embodiment of this application, a distance between an edge of the filler adhesive adjacent to the third side wall and the third side wall is less than a distance between the geometric center of the first surface and an edge of the filler adhesive close to the geometric center of the clearance area.

According to a second aspect, this application provides a battery pack, wherein the battery pack includes the foregoing battery assembly.

According to a third aspect, this application provides an electrical system, wherein the electrical system includes the foregoing battery assembly or includes the foregoing battery pack.

This application has the following beneficial effects: the battery assembly in this application is configured to provide electrical energy by providing the plurality of battery cells stacked in the vertical direction. In addition, the support member is provided between two adjacent battery cells to support the two adjacent battery cells, so that there is a gap between the two adjacent battery cells, to provide a reserved expansion space for the battery cells. In the battery assembly in this application, by providing the adhesive member between the two adjacent battery cells, a relative displacement between the two adjacent battery cells can be defined, to prevent separation between the adjacent battery cells. Further, in the battery assembly in this application, the support member and the adhesive member provided between the two adjacent battery cells cooperate jointly, to prevent separation between the two stacked adjacent battery cells. In addition, a gap is formed between central regions of opposite surfaces of the two adjacent battery cells, to provide a reserved expansion space and prevent the two adjacent battery cells from pressing against each other due to an excessive expansion force, thereby improving performance and a service life of the battery module. Furthermore, after a clearance area is defined between two battery cells, because a weight of the battery cell is large on a side on which the terminal post is provided, the support member is provided at a position close to a first side wall, to ensure that a reserved expansion space formed in a central region of the first surface is relatively reliable, thereby preventing a top battery cell from shifting toward a terminal post side.

### BRIEF DESCRIPTION OF DRAWINGS

FIG. 1 is a diagram of a structure of a vehicle according to an embodiment of this application;
FIG. 2 is a diagram of a planar structure of one side of a battery assembly according to an embodiment of this application;
FIG. 3 is a diagram of a planar structure of the other side of a battery assembly according to an embodiment of this application;
FIG. 4 is a diagram of a planar structure of one side of a battery assembly according to another embodiment of this application;
FIG. 5 is a diagram of a planar structure of one side of a battery assembly according to another embodiment of this application;
FIG. 6 is a diagram of a planar structure of one side of a battery assembly according to another embodiment of this application;
FIG. 7 is a diagram of a planar structure of one side of a battery assembly according to another embodiment of this application;
FIG. 8 is a diagram of a planar structure of one side of a battery assembly according to another embodiment of this application;
FIG. 9 is a diagram of a planar structure of one side of a battery assembly according to another embodiment of this application; and
FIG. 10 is a block diagram of a battery pack according to an embodiment of this application.

Reference numerals: 200: vehicle; 201: vehicle body; 202: battery pack; 100: battery assembly; 10: battery cell; 11: first surface; 111: clearance area; 12: side wall; 12a: first side wall; 12b: second side wall; 12c: third side wall; 13: terminal post; 20: support member; 20a: first support member; 30: adhesive member; 40: filler adhesive; 001: first direction; 002: second direction; 003: third direction.

### DESCRIPTION OF EMBODIMENTS

For ease of understanding this application, this application will be described more comprehensively below with reference to the related accompanying drawings. Preferred implementations of this application are shown in the accompanying drawings. However, this application may be implemented in many different forms and is not limited to implementations described herein. Instead, these implementations are provided for a more thorough and comprehensive understanding of the disclosure of this application.

The following descriptions of embodiments are made with reference to additional illustrations, and are used to illustrate specific embodiments in which this application can be implemented. The serial numbers for components used herein, such as "first", and "second" are merely used to distinguish described objects and do not have any sequential or technical meaning. Terms "connection" and "linkage" stated in this application include both direct and indirect connections (linkages), unless otherwise specified. Directional terms mentioned in this application, such as "up", "down", "front", "back", "left", "right", "inner", "outer", and "lateral" are merely directions with reference to the accompanying drawings. Therefore, the directional terms used are for better and clearer explanation and understanding of this application, instead of indicating or implying that apparatuses or elements indicated must have particular orientations, and be constructed and operated in the particular orientations, so that these terms will not be construed as limiting this application.

In the description of this application, unless otherwise expressly specified and limited, the terms "mount", "connect", "link", and the like will be understood in a broad sense, such as, a fixed connection, a detachable connection, or an integral connection; a mechanical connection; or a direct connection, an indirect connection through an intermediate medium, or an internal connection of two elements. For those of ordinary skill in the art, the specific meanings of the foregoing terms in this application will be understood according to specific situations. It will be noted that in the specification, claims, and accompanying drawings of this application, the terms "first", "second" and the like are intended to distinguish different objects but do not indicate a particular order. In addition, the terms "include/comprise" "may include/comprise", "contain," or "may contain" used in this application indicate the presence of a disclosed corresponding function, operation, element, or the like, and do not limit the presence of one or a plurality of other functions, operations, elements. In addition, the term "include/comprise" or "contain" indicates the presence of a corresponding feature, number, step, operation, element, component, or a combination thereof disclosed in the specification, but does not exclude the presence or addition of one or a plurality of other features, numbers, steps, operations, elements, components, or combinations thereof, and is intended to cover a non-exclusive inclusion.

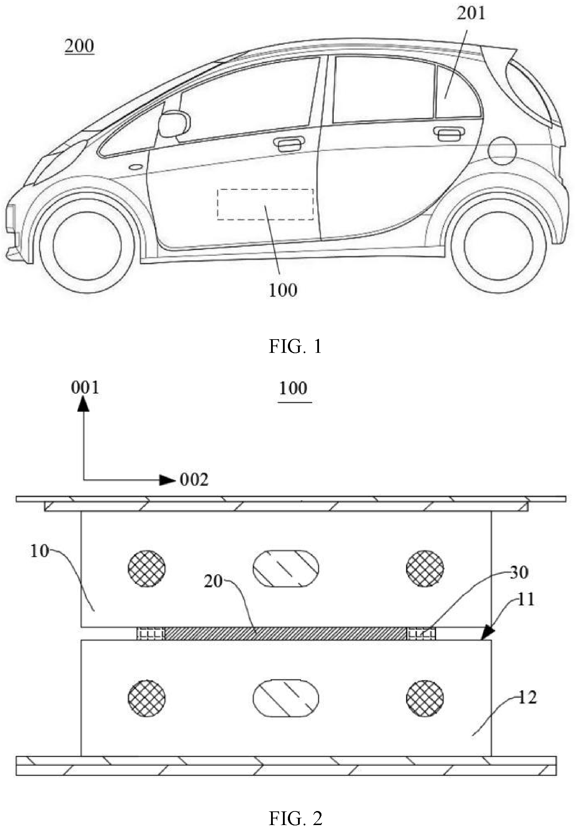

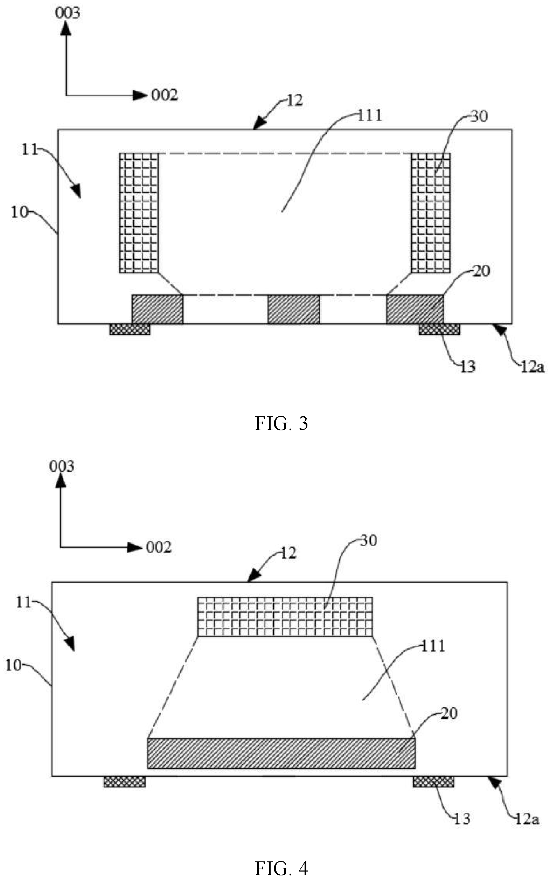

FIG. 2 is a diagram of a planar structure of one side of a battery assembly 100 according to an embodiment of this application; and FIG. 3 is a diagram of a planar structure of the other side of a battery assembly 100 according to an embodiment of this application. In this embodiment of this application, as shown in FIG. 2 to FIG. 9, a first direction 001 is a vertical direction, and is also a stacking direction of battery cells 10. The second direction 002 is a length direction of the battery assembly 100. The third direction 003 is a width direction of the battery assembly 100.

As shown in FIG. 2, the battery assembly 100 in this application includes a plurality of battery cells 10 stacked in a vertical direction, a support member 20, and an adhesive member 30. The plurality of battery cells 10 are stacked in the vertical direction. Opposite surfaces of two adjacent battery cells 10 in the vertical direction are respectively first surfaces 11, and the support member 20 and the adhesive member 30 are provided on the first surface 11. The first surface 11 is further provided with a clearance area 111, and the support member 20 and the adhesive member 30 are provided at an edge of the clearance area 111. Each of the battery cells 10 includes a first side wall 12a located on a same side of the battery assembly 100 in a horizontal direction, the first side wall 12a is connected to the first surface 11, a terminal post 13 of the battery cell 10 is provided on the first side wall 12a, and the support member 20 is provided adjacent to the first side wall 12a.

In this disclosed embodiment of this application, as shown in FIG. 2 to FIG. 8, the battery assembly 100 is configured to provide electrical energy by providing the plurality of battery cells 10 stacked in the vertical direction. In addition, the support member 20 is provided between the two adjacent battery cells 10 to support the two adjacent battery cells 10, so that there is a gap between the two adjacent battery cells 10, to provide a reserved expansion space for the battery cells 10. In the battery assembly 100 in this application, by providing the adhesive member 30 between the two adjacent battery cells 10, a relative displacement between the two adjacent battery cells 10 can be defined, to prevent separation between the adjacent battery cells 10. In addition, in the battery assembly 100 disclosed in this embodiment of this application, the support member 20 and the adhesive member 30 provided between the two adjacent battery cells 10 cooperate jointly, to prevent separation between the two adjacent stacked battery cells 10. Further, the clearance area 111 is formed between the opposite surfaces of the two adjacent battery cells 10 via the support member 20 and the adhesive member 30, to provide the reserved expansion space and prevent the two adjacent battery cells 10 from pressing against each other due to an excessive expansion force, thereby improving performance and service life of the battery assembly 100. Furthermore, after a clearance area 111 is defined between two batteries, because a weight of the battery cell 10 is larger on a side on which the terminal post 13 is provided than other positions, the support member 20 is provided at a position close to the first side wall 12a, to ensure that a reserved expansion space formed in a central region of the first surface 11 is relatively reliable, thereby preventing a top battery cell 10 from shifting toward a terminal post 13 side.

In an embodiment disclosed in this application, as shown in FIG. 2 to FIG. 8, the battery cell 10 is a square battery cell. That is, a shape of the battery cell 10 is a hexahedral cube. The battery cell 10 includes an upper surface and a lower surface that are opposite to each other in the first direction 001. The first direction 001 is the vertical direction. There are a plurality of battery cells 10, and the plurality of battery cells 10 are stacked in the first direction 001. After the two adjacent battery cells 10 are stacked, the opposite surfaces of the two battery cells 10, that is, an upper surface of a bottom battery cell 10 and a lower surface of the top battery cell 10, are both the first surfaces 11, and the adhesive member 30 and the support member 20 are respectively connected to the first surfaces 11 of the top battery cell 10 and the bottom battery cell 10. Further, the upper surface and the lower surface of the battery cell 10 have significantly larger areas than other side surfaces, to ensure stability of stacking of the battery cells 10. For ease of description, the upper surface and the lower surface of the battery cell 10 each are defined as a large surface of the battery cell 10, and a large surface of any one of the battery cells 10 is the first surface 11.

In addition, in this embodiment of this application, as shown in FIG. 2 to FIG. 8, the battery cell 10 further includes a terminal post 13. There are two terminal posts 13, and the two terminal posts 13 are spaced apart on one of side walls 12 of the battery cell 10, that is, spaced apart on the first side wall 12a. The first side wall 12a is connected to the first surface 11 of the battery cell 10, and the first side wall 12a is perpendicular to the first surface 11 of the battery cell 10. The terminal post 13 may be used as a power lead-out terminal, to lead out electrical energy stored in the battery cell 10. The support member 20 is provided adjacent to the first side wall 12a. Specifically, in an example of this application, an end surface of the battery cell 10 close to a terminal post 13 end is relatively high in mass compared with other end surfaces. Therefore, when two battery cells 10 are stacked in a height direction, the top battery cell 10 is prone to tilting or moving toward a side close to the terminal post 13. Therefore, by providing the support member 20 close to the first side wall 12a, the purpose of supporting the top can be achieved, thereby reducing tilting of the top battery cell 10 toward the terminal post 13.

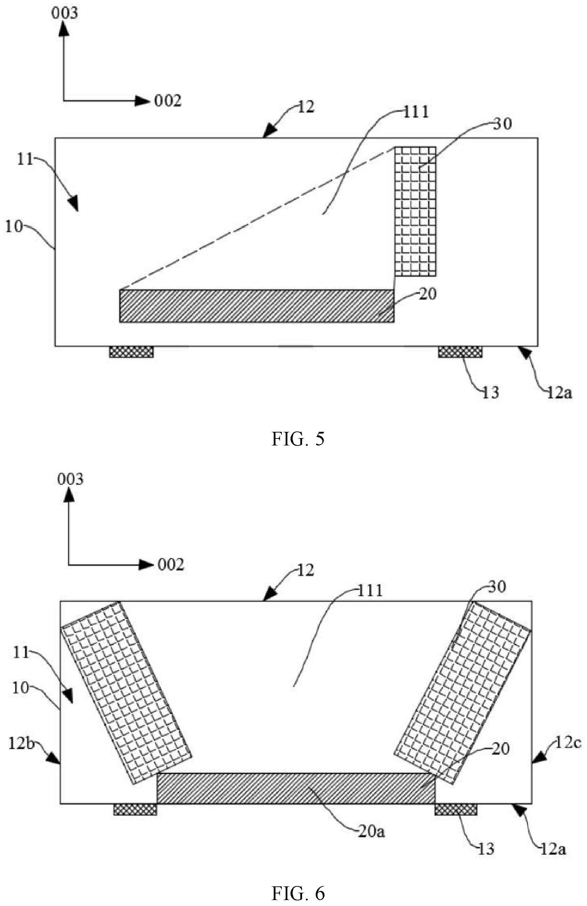

In an embodiment of this application, the support member 20 and the adhesive member 30 are provided at the edge of the clearance area 111, that is, the support member 20 and the adhesive member 30 jointly enclose the clearance area 111. In other embodiments of this application, the support member 20 and the adhesive member 30 are provided at the edge of the clearance area 111. That is, a part of the edge of the clearance area 111 is defined by the support member 20 and the adhesive member 30, and the remaining part of the edge of the clearance area 111 may be defined by an extension line or a connection line between an edge of the support member 20 and an edge of the adhesive member 30, as shown in FIG. 4 and FIG. 5.

In an embodiment disclosed in this application, after the two battery cells 10 are stacked in the first direction 001, a terminal post 13 of the top battery cell 10 and a terminal post 13 of the bottom battery cell 10 may be provided at two opposite ends respectively. Alternatively, a terminal post 13 of the top battery cell 10 and a terminal post 13 of the bottom battery cell 10 are both provided at two opposite ends, for example, provided on surfaces of two ends of the battery cell 10 in the length direction or the width direction of the battery assembly 100. In this configuration, the support members 20 are separately provided on the first surface 11 adjacent to ends of the terminal posts 13 of the two battery cells 10, thereby reducing a risk that the top battery cell 10 shifts toward the terminal post 13 side, and improving safety and reliability of the battery assembly 100.

In an embodiment of this application, as shown in FIG. 3 to FIG. 9, the support member 20 extends in the length direction of the battery assembly 100 or the width direction of the battery assembly 100 and is located between two adjacent terminal posts 13. Specifically, the support member 20 is located between the two terminal posts 13, that is, projection points of two ends of the support member 20 in an extension direction of the support member 20 on the first side wall 12a are located between the two terminal posts 13. In addition, a region between the two terminal posts 13 may be a region on the first surface 11 divided by drawing tangent lines from points of the two terminal posts 13 farthest from each other in the first direction 001. Therefore, a projection of the end of the support member 20 in the extension direction of the support member 20 on the first side wall 12a may overlap the terminal post 13. In this embodiment, the support member 20 is provided between the two terminal posts 13, so that a length of the support member 20 and costs of the support member 20 are reduced while the support member 20 limits shifting of the top battery cell 10.

In an embodiment of this application, as shown in FIG. 3, there are a plurality of support members 20, and all support members 20 are spaced apart in the length direction of the battery assembly 100, to further reduce the costs of the support member 20.

In an embodiment disclosed in this application, a thickness of the support member 20 in the first direction 001 ranges from 0.5 mm to 2 mm.

In an embodiment disclosed in this application, the thickness of the adhesive member 30 in the first direction 001 ranges from 0.2 mm to 1 mm.

In an embodiment disclosed in this application, as shown in FIG. 6 to FIG. 9, the battery cell 10 further includes a second side wall 12b, and the second side wall 12b is connected to both the first side wall 12a and the first surface 11. The adhesive member 30 is provided adjacent to the second side wall 12b. The adhesive member 30 is provided adjacent to the second side wall 12b, so that an area of the clearance area 111 on the first surface 11 can be increased, thereby ensuring that the battery cell 10 has sufficient expansion space, and solving the problem of severe lithium plating in the battery cell 10.

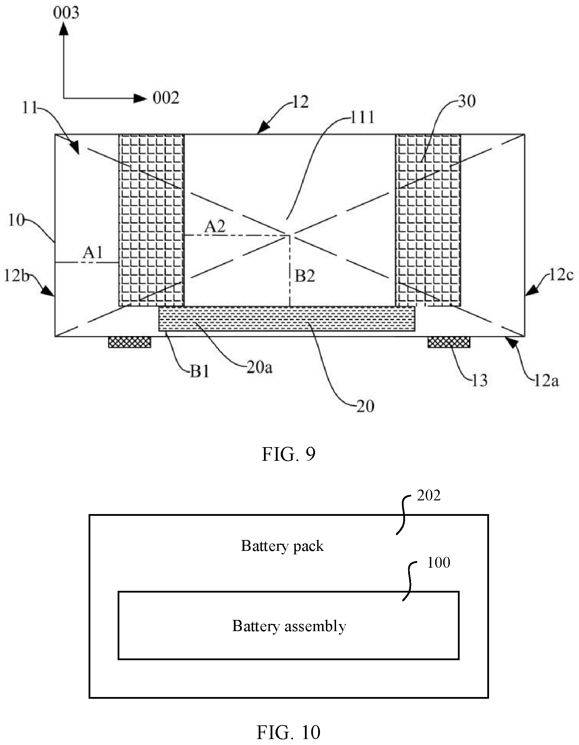

Further, the support member 20 being provided adjacent to the first side wall 12a is that a distance between any position of the support member 20 close to an edge of the first side wall 12a and a plane on which the first side wall 12a is located is less than a distance between a geometric center of the first surface 11 and a plane on which an edge of the support member 20 away from the first side wall 12a is located. Specifically, as shown in FIG. 9, the distance between the any position of the support member 20 close to the edge of the first side wall 12a and the plane on which the first side wall 12a is located is B1, and the distance between the geometric center of the first surface 11 and the plane on which the edge of the support member 20 away from the first side wall 12a is located is B2, where B1 < B2.

Further, the adhesive member 30 being provided adjacent to the second side wall 12b is that a distance between any position of the adhesive member 30 close to an edge of the second side wall 12b of the battery cell 10 and a plane on which the second side wall 12b of the battery cell 10 is located is less than a distance between the geometric center of the first surface 11 and a plane on which an edge of the adhesive member 30 away from the second side wall 12b is located. Specifically, as shown in FIG. 9, the distance between the any position of the adhesive member 30 close to the edge of the second side wall 12b of the battery cell 10 and the plane on which the second side wall 12b of the battery cell 10 is located is A1, and the distance between the geometric center of the first surface 11 and the plane on which the edge of the adhesive member 30 away from the second side wall 12b is located is A2, where A1 < A2.

In an embodiment disclosed in this application, a ratio of the distance between the any position of the support member 20 close to the edge of the first side wall 12a and the plane on which the first side wall 12a is located to the distance between the geometric center of the first surface 11 and the plane on which the edge of the support member 20 away from the first side wall 12a is located ranges from 0 to 0.8. Specifically, as shown in FIG. 9, the distance between the any position of the support member 20 close to the edge of the first side wall 12a and the plane on which the first side wall 12a is located is B1, and the distance between the geometric center of the first surface 11 and the plane on which the edge of the support member 20 away from the first side wall 12a is located is B2, where 0 < B1/B2 < 4/5.

In this embodiment, a ratio of a distance between a geometric center of the support member 20 and the first side wall 12a to the distance between the geometric center of the support member 20 and a geometric center of a surface of the battery cell 10 ranges from 0 to 0.8, to ensure that a position of the support member 20 is relatively away from the geometric center of the surface of the battery cell 10, thereby ensuring that sufficient reserved expansion space is provided in a central region of the surface of the battery cell 10. In addition, a risk that the top battery cell 10 shifts or tilts toward the terminal post 13 side can be further reduced, thereby improving safety of a battery.

In an embodiment disclosed in this application, a ratio of the distance between the any position of the adhesive member 30 close to the edge of the second side wall 12b of the battery cell 10 and the plane on which the second side wall 12b of the battery cell 10 is located to the distance between the geometric center of the first surface 11 and the plane on which the edge of the adhesive member 30 away from the second side wall 12b is located ranges from 0 to 0.85. Specifically, as shown in FIG. 9, the distance between the any position of the adhesive member 30 close to the edge of the second side wall 12b of the battery cell 10 and the plane on which the second side wall 12b of the battery cell 10 is located is A1, and the distance between the geometric center of the first surface 11 and the plane on which the edge of the adhesive member 30 away from the second side wall 12b is located is A2, where 0 < A1/A2 < 17/20.

In this embodiment, a ratio of a distance between a geometric center of the adhesive member 30 and a side wall relatively close to the adhesive member 30 to a distance between the geometric center of the adhesive member 30 and the geometric center of the surface of the battery cell 10 ranges from 0 to 0.85, to ensure that a relative position of the adhesive member 30 is far away from the geometric center of the surface of the battery cell 10, thereby ensuring that the sufficient reserved expansion space is provided in the central region of the surface of the battery cell 10. In addition, sufficient adhesive members 30 can be provided on the first surface 11, to ensure adhesive strength between the top battery cell 10 and the bottom battery cell 10, thereby improving overall reliability of the battery assembly 100.

In an embodiment disclosed in this application, as shown in FIG. 6 to FIG. 9, there are at least two adhesive members 30, the at least two adhesive members 30 are spaced apart in a length direction of the battery assembly 100, an included angle is preset between an extension direction of each adhesive member 30 and the extension direction of the support member 20, and the preset included angle is between 0° and 90°. In this embodiment, by providing the at least two adhesive members 30, adhesive strength between the two adjacent battery cells 10 is ensured, thereby improving stability and safety of the battery assembly 100. In addition, when the preset included angle is between 0° and 90°, sufficient reserved expansion space is provided in the clearance area 111 of the first surface 11 of the battery cell 10. In addition, because a relationship between an extension direction of the adhesive member 30 and the extension direction of the support member 20 is defined, a position requirement or an orientation requirement for the adhesive member 30 during adhesion is ensured, thereby ensuring adhesive strength of the adhesive member 30.

Further, as shown in FIG. 5 to FIG. 9, both a projection of the support member 20 and a projection of the adhesive member 30 on the first surface 11 are rectangular, and the extension direction of the support member 20 is perpendicular to the extension direction of the adhesive member 30. By selecting the rectangular adhesive member 30, a bonding area of the adhesive member 30 can be increased, and uniform bonding strength can be ensured at any position of the adhesive member 30, thereby improving safety and stability of the battery assembly 100.

In an embodiment disclosed in this application, a ratio of a projected area of the support member 20 on the first surface 11 to an area of the first surface 11 ranges from 0.1% to 10%.

In an embodiment, the ratio of the projected area of the support member 20 on the first surface 11 to the area of the first surface 11 ranges from 0.1% to 10%, to ensure support effect of the support member 20, and ensure reliability of the reserved expansion space.

In another embodiment disclosed in this application, if the plurality of support members 20 are provided on the first surface 11, a ratio of a sum of projected areas of the plurality of support members 20 on the first surface 11 to the area of the first surface 11 ranges from 0.1% to 10%.

In an embodiment disclosed in this application, a ratio of a projected area of the adhesive member 30 on the first surface 11 to the area of the first surface 11 ranges from 20% to 70%.

In an embodiment, the ratio of the projected area of the adhesive member 30 on the first surface 11 to the area of the first surface 11 ranges from 20% to 70%, to ensure support effect of the adhesive member 30, ensure that sufficient expansion space is reserved on the first surface 11, and ensure reliability of the reserved expansion space.

In other embodiments disclosed in this application, if a plurality of adhesive members 30 are provided on the first surface 11, a ratio of a sum of projected areas of the plurality of adhesive members 30 on the first surface 11 to the area of the first surface 11 ranges from 20% to 70%.

In an embodiment disclosed in this application, the projected area of the support member 20 on the first surface 11 is less than the projected area of the adhesive member 30 on the first surface 11. In this embodiment, by jointly defining a ratio of an area of the adhesive member 30 to an area of the support member 20, the projected area of the adhesive member 30 on the first surface 11 is larger than the projected area of the support member 20 on the first surface 11. This can ensure that a bonding force of the adhesive member 30 to the battery cell 10 is greater than a support force of the support member 20 to the battery cell 10, thereby ensuring stability of stacking of the two adjacent battery cells 10 and preventing separation between the two adjacent battery cells 10. In addition, if the adhesive member 30 occupies an excessively large area on the first surface 11, the reserved expansion space is excessively small. This affects heat dissipation effect and increases costs.

Further, the ratio of the projected area of the support member 20 on the first surface 11 to the area of the first surface 11 ranges from 0.1% to 10%, and the ratio of the projected area of the adhesive member 30 on the first surface 11 to the area of the first surface 11 ranges from 20% to 70%.

In an embodiment disclosed in this application, the geometric center of the first surface 11 is located in the clearance area 111. Specifically, because an expanded surface of the battery cell 10 is in a parabolic shape, that is, an expansion degree of a center of the first surface 11 is greater than an expansion degree of a periphery of the first surface 11, providing the geometric center of the first surface 11 in the clearance area 111 can ensure that the relatively sufficient expansion space can be reserved in a central region, thereby reducing lithium plating in the battery cell 10 and improving safety of the battery cell 10.

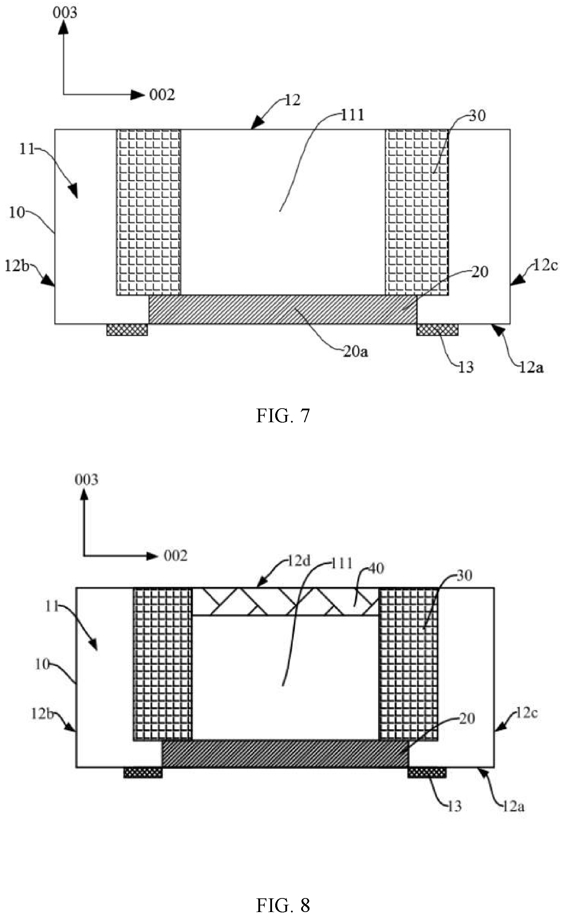

In an embodiment disclosed in this application, as shown in FIG. 8, the battery assembly 100 further includes a filler adhesive 40, and the filler adhesive 40 is provided between the two adjacent battery cells 10 and is located on the first surface 11. The battery cell 10 further includes a third side wall 12c, the third side wall 12c and the first side wall 12a are opposite to each other in the width direction of the battery assembly 100, and the filler adhesive 40 is provided adjacent to the third side wall 12c. It will be understood that, in this embodiment, the filler adhesive 40 and the support member 20 may cooperate jointly, to support the two stacked adjacent battery cells 10, thereby defining a spacing height between the two adjacent battery cells 10 and improving stability of support. Further, the filler adhesive 40 is closer to the second side wall 12b relative to the first side wall 12a. This ensures that sufficient reserved expansion space is provided in the central region of the first surface 11 of the battery cell 10. In addition, based on specific viscosity of the filler adhesive 40, the filler adhesive 40 may assist the adhesive member 3030 in defining a relative displacement between the two adjacent battery cells 10.

Further, a distance between an edge of the filler adhesive 40 adjacent to the third side wall 12c and the third side wall 12c is less than a distance between an edge of the filler adhesive 40 close to the clearance area 111 and the geometric center of the first surface 11, to ensure that sufficient expansion space is reserved, and ensure that there is a relatively reliable bonding force between the two adjacent stacked battery cells 10.

Referring to FIG. 10, this application provides a battery pack 202. The battery pack 202 includes the foregoing battery assembly 100. Specifically, the battery pack 202 includes a tray and a sealing cover. The tray and the sealing cover jointly enclose an accommodating cavity, and the battery assembly 100 is located in the accommodating cavity.

In addition, this application further provides an electrical system. The electrical system includes the foregoing battery assembly 100 or the foregoing battery pack 202. Specifically, the electrical system may be a vehicle 200, or may be an energy storage system.

As shown in FIG. 1, the vehicle 200 provided in this application includes a vehicle body 201 and the battery assembly 100. The battery assembly 100 is accommodated and fastened in the vehicle body 201, and the battery assembly 100 is configured to supply electric power to the vehicle 200, and drive the vehicle 200 to travel. It will be understood that the battery assembly 100 in this application may be applicable to an electric vehicle, including a pure electric vehicle and a hybrid vehicle.

It will be understood that the terms "first" and "second" mentioned below are merely intended for a purpose of description, and will not be understood as an indication or implication of relative importance or implicit indication of a quantity of indicated technical features. Therefore, a feature limited by "first" or "second" may explicitly or implicitly include one or more features. In the description of the implementations of this application, "a plurality of" means two or more, unless otherwise explicitly and specifically defined.

In the description of this specification, descriptions referring to the terms "an implementation", "some implementations", "exemplary implementations", "examples", or "some examples" mean that specific features, structures, materials, or characteristics described in connection with the implementation or example are included in at least one implementation or example of this application. In this specification, example expressions of the foregoing terms do not necessarily mean a same implementation or example. Furthermore, the specific features, structures, materials, or characteristics may be combined in a proper manner in any one or more of implementations or examples.

It will be understood that the application of this application is not limited to the foregoing examples, and a person of ordinary skill in the art may make improvements or alterations according to the foregoing description, and all such improvements and alterations will fall within the protection scope of the appended claims of this application. A person of ordinary skill in the art will understand that implementing all or part of the processes of the foregoing embodiment and making equivalent changes according to the claims of this application still fall within the scope of this application.

## Claims

1. A battery assembly (100), comprising:
a plurality of battery cells (10) stacked in a vertical direction, opposite surfaces of two adjacent battery cells (10) in the vertical direction being respectively first surfaces (11), and the first surface (11) being further provided with a clearance area (111); and
a support member (20) and an adhesive member (30), the support member (20) and the adhesive member (30) being provided on the first surface (11), and the support member (20) and the adhesive member (30) being provided on an edge of the clearance area (111); and
each of the battery cells (10) comprising a first side wall (12a) located on a same side of the battery assembly (100) in a horizontal direction, the first side wall (12a) being connected to the first surface (11), a terminal post (13) of the battery cell (10) being provided on the first side wall (12a), and the support member (20) being provided adjacent to the first side wall (12a).

2. The battery assembly (100) according to claim 1, wherein the battery cell (10) further comprises a second side wall (12b), the second side wall (12b) is connected to both the first side wall (12a) and the first surface (11), and the adhesive member (30) is provided adjacent to the second side wall (12b).

3. The battery assembly (100) according to claim 1 or 2, wherein a distance between any position of the support member (20) close to an edge of the first side wall (12a) and a plane on which the first side wall (12a) is located is less than a distance between a geometric center of the first surface (11) and a plane on which an edge of the support member (20) away from the first side wall (12a) is located; and/or
a distance between any position of the adhesive member (30) close to an edge of the second side wall (12b) of the battery cell (10) and a plane on which the second side wall (12b) of the battery cell (10) is located is less than a distance between a geometric center of the first surface (11) and a plane on which an edge of the adhesive member (30) away from the second side wall (12b) is located.

4. The battery assembly (100) according to any one of claims 1 to 3, wherein a ratio of the distance between the any position of the support member (20) close to the edge of the first side wall (12a) and the plane on which the first side wall (12a) is located to the distance between the geometric center of the first surface (11) and the plane on which the edge of the support member (20) away from the first side wall (12a) is located ranges from 0 to 0.8.

5. The battery assembly (100) according to any one of claims 1 to 4, wherein a ratio of the distance between the any position of the adhesive member (30) close to the edge of the second side wall (12b) of the battery cell (10) and the plane on which the second side wall (12b) of the battery cell (10) is located to the distance between a geometric center of the first surface (11) and a plane on which an edge of the adhesive member (30) away from the second side wall (12b) is located ranges from 0 to 0.85.

6. The battery assembly (100) according to any one of claims 1 to 5, wherein there are at least two adhesive members (30), the at least two adhesive members (30) are spaced apart in a length direction of the battery assembly (100), an included angle is preset between an extension direction of each adhesive member (30) and an extension direction of the support member (20), and the preset included angle is between 0° and 90°.

7. The battery assembly (100) according to any one of claims 1 to 6, wherein both a projection of the support member (20) and a projection of the adhesive member (30) on the first surface (11) are rectangular, and the extension direction of the support member (20) is perpendicular to an extension direction of the adhesive member (30).

8. The battery assembly (100) according to any one of claims 1 to 7, wherein the support member (20) extends in the length direction of the battery assembly (100) or a width direction of the battery assembly (100) and is located between two adjacent terminal posts (13), and both the length direction of the battery assembly (100) and the width direction of the battery assembly (100) are perpendicular to the vertical direction.

9. The battery assembly (100) according to any one of claims 1 to 8, wherein there are a plurality of support members (20), and all support members (20) are spaced apart in the length direction of the battery assembly (100) or the width direction of the battery assembly (100).

10. The battery assembly (100) according to any one of claims 1 to 9, wherein a ratio of a projected area of the support member (20) on the first surface (11) to an area of the first surface (11) ranges from 0.1% to 10%.

11. The battery assembly (100) according to any one of claims 1 to 10, wherein a ratio of a projected area of the adhesive member (30) on the first surface (11) to an area of the first surface (11) ranges from 20% to 70%.

12. The battery assembly (100) according to any one of claims 1 to 11, wherein the projected area of the support member (20) on the first surface (11) is less than the projected area of the adhesive member (30) on the first surface (11).

13. The battery assembly (100) according to any one of claims 1 to 12, wherein the geometric center of the first surface (11) is located in the clearance area (111).

14. The battery assembly (100) according to any one of claims 1 to 13, wherein the battery assembly (100) further comprises a filler adhesive (40), the filler adhesive (40) is provided between the two adjacent battery cells (10) and is located on the first surface (11), the battery cell (10) further comprises a third side wall (12c), the third side wall (12c) and the first side wall (12a) are opposite to each other in the width direction of the battery assembly (100), and the filler adhesive (40) is provided adjacent to the third side wall (12c).

15. The battery assembly (100) according to claim 14, wherein a distance between an edge of the filler adhesive (40) adjacent to the third side wall (12c) and the third side wall (12c) is less than a distance between the geometric center of the first surface (11) and an edge of the filler adhesive (40) close to the geometric center of the clearance area (111).

16. A battery pack (202), comprising the battery assembly (100) according to any one of claims 1 to 15.

17. An electrical system, comprising the battery pack (202) according to claim 16 or the battery assembly (100) according to any one of claims 1 to 15.
